(19) **Europäisches Patentamt**

**European Patent Office**

**Office européen des brevets**

(11) Veröffentlichungsnummer: **0 039 498**

**B1**

(12) **EUROPÄISCHE PATENTSCHRIFT**

(45) Veröffentlichungstag der Patentschrift :
25.07.84

(51) Int. Cl.³ : **G 02 C 7/02**

(21) Anmeldenummer : **81103321.6**

(22) Anmeldetag : **02.05.81**

(54) **Brillenlinse mit astigmatischer Wirkung.**

(30) Priorität : **02.05.80 DE 3016936**

(43) Veröffentlichungstag der Anmeldung :
**11.11.81 Patentblatt 81/45**

(45) Bekanntmachung des Hinweises auf die Patenterteilung : **25.07.84 Patentblatt 84/30**

(84) Benannte Vertragsstaaten :
**AT CH FR GB IT LI NL SE**

(56) Entgegenhaltungen :
**FR-A- 2 344 043**
**US-A- 3 722 986**

(73) Patentinhaber : **Firma Carl Zeiss**
**D-7920 Heidenheim (Brenz) (DE)**

(72) Erfinder : **Fürter, Gerhard, Dipl.-Math.**
**Hegelstrasse 124**
**D-7080 Aalen (DE)**
Erfinder : **Lahres, Hans**
**Am Sattel 5**
**D-7080 Aalen-Wasseralfingen (DE)**

## Beschreibung

Die vorliegende Erfindung betrifft eine Brillenlinse mit astigmatischer Wirkung.

Bei solchen, zur Korrektur eines Augenastigmatismus dienenden Brillenlinsen hat zumindest eine Oberfläche eine zylindrische Wirkung, d. h. sie ist nicht zur optischen Achse rotationssymmetrisch. Im allgemeinen ist die Linsenfläche mit zylindrischer Wirkung als torische Fläche ausgeführt. Eine solche torische Fläche entsteht durch Rotation eines Kreisbogens um eine Achse, die nicht durch den Mittelpunkt dieses Kreisbogens verläuft. Sie besitzt also in den beiden Hauptschnitten unterschiedliche Krümmungsradien.

Solche torischen Flächen genügen, insbesondere bei Brillenlinsen mit hohem Scheitelbrechwert nicht mehr den gestellten Anforderungen, d. h. mit ihrer Hilfe läßt sich in diessen Bereichen die Fehlsichtigkeit des Auges nicht mehr für alle Blickrichtungen in hinreichendem Maße korrigieren.

Es ist bekannt (DE-A-1 805 561) bei einer Brillenlinse mit stark positivem Scheitelbrechwert, wie sie insbesondere von Aphaken, d. h. Staroperierten benutzt wird eine Linsenfläche so auszubilden, daß alle durch die optische Achse der Linse gehenden Ebenen mit dieser Fläche Schnittkurven bilden, die näherungsweise die Form eines Ellipsenteiles haben. Dabei ist die Fläche im gesamten Bereich zwischen den Hauptmeridianen aus den Daten der Schnittkurven dieser beiden Meridiane rein azimutabhängig interpoliert. Ein solcher Flächenansatz besitzt für eine optimale Korrektion der Gesamtfläche zu wenige Freiheitsgrade.

Es ist die Aufgabe der vorliegenden Erfindung eine Brillenlinse mit astigmatischer Wirkung zu schaffen, bei der die astigmatische Wirkung der Brillenlinse über ihre gesamte Fläche die astigmatische Wirkung des Auges optimal aufhebt. Optimal bedeutet in diesem Zusammenhang, daß ein kleiner tolerierbarer Astigmatismus zugelassen werden kann.

Diese Aufgabe wird durch eine Brillenlinse gemäß der Merkmalen des Anspruchs 1 gelöst.

Eine gemäß dieser Lösung ausgebildete Linsenfläche wird im folgenden als deformierte Linsenfläche bezeichnet.

Bei der deformierten Linsenfläche nach der vorliegenden Erfindung besteht kein mathematischgesetzmäßiger Zusammenhang zwischen den Schnittkurven, welche die durch die optische Achse der Linse gehenden Ebenen mit dieser Fläche bilden.

Es ist ohne weiteres einzusehen, daß durch die Zusammensetzung der deformierten Linsenfläche aus einzeln berechneten kleinen Bereichen soviele Freiheitsgrade zur Verfügung stehen, daß eine optimale Korrektur zu jeder Blicklage des Auges erreichbar ist.

Bei der neuen Brillenlinse stimmen bei jeder Blickbewegung des Auges, d. h. auch in allen Punkten zwischen den Hauptmeridianen, die von der Linse erzeugte und die vom Auge für die Korrektur geforderte Achslage des Astigmatismus weitgehendst überein ; dasselbe gilt auch für den Betrag des Astigmatismus. Die Lage des Augenastigmatismus im Raum ist zu jeder Augenstellung gemäß der Listingschen Regel bestimmbar. Diese lautet : « Wechselt das Auge seine Blickrichtung, so verhält sich die Stellung des Augapfels in der neuen Blicklage zu der Ausgangsblicklage so, als sei in der durch die Ausgangs- und Endblickrichtung bestimmten Ebene eine einfache Drehung um den Augendrehpunkt erfolgt ». Ausgehend von dieser Verteilung des Augenastigmatismus, werden dann Astigmatismus und Einstellfehler als Restfehler des Systems Linse-Auge berechnet und zwar bezogen auf den Hornhautscheitel und für einen Abstand des optischen Augendrehpunktes vom hinteren Linsenscheitel, der die üblichen Abstände der Linse zur Hornhaut und die Abhängigkeit der Lage des optischen Augendrehpunkts von der Fehlsichtigkeit berücksichtigt.

Die Listingsche Regel kann als gute Annäherung an den statistischen Durchschnitt betrachtet werden. Es ist selbstverständlich möglich, daß Gesetzmäßigktein, welche die tatsächlichen Verhältnisse noch genauer beschreiben, im Rahmen der Erfindung zur Flächenberechnung verwendet werden.

Die Berechnung kann im Prinzip so geführt werden, daß ein astigmatischer Restfehler von nahezu Null erreicht wird. Es verbleibt dabei ein kleiner Einstellfehler, d. h. der Punkt der Strahlenvereinigung liegt nicht direkt auf der Netzhaut des Auges. Bei Brillenlinse positiven Scheitelbrechwerts ist der Einstellfehler in der Regel negativ, d. h. der Ort bester Strahlenvereinigung liegt hinter der Netzhaut. Der Einstellfehler liegt beispielsweise bei einer Wirkung von sph = + 6 dpt, cyl = + 4 dpt und einem Blickwinkel von w = 30° unter 1 dpt. Ein solcher Wert kann durch Akkomodation im allgemeinen hinreichend ausgeglichen werden.

Nach der Erfindung wird im System Linse-Auge ein mit dem Blickwinkel zunehmender Restastigmatismus zugelassen, dessen Betrag die Formel des Anspruchs 1 angibt. Ein solcher kleiner Restastigmatismus wirkt sich günstig auf den Einstellfehler aus, was vor allem bei Brillenlinsen für Aphake und bei Brillenlinsen mit stärkerem negativen Scheitel-Brechwert vorteilhaft ist. Zudem haben Untersuchungen der Modulationsübertragungsfunktion gezeigt, daß das Optimum der Kontrastübertragung bei kleinen Beträgen des Astigmatismus liegan kann.

Wie schon weiter oben erwähnt, gehen in die Berechnung der deformierten Linsenfläche die Abstände des Auges vom betrachteten Objekt ein. Dieser Objektabstand kann über das gesamte Blickfeld gleich sein, und zwar endlich oder unendlich ; damit ergibt sich eine Einstärkenlinse. Der Objektabstand kann auch von der Blickrichtung abhängen, so daß sich alle Arten von Mehrstärkengläsern, d. h. auch

2

Gleitsichtgläser ausführen lassen. Die deformierte Fläche kann zumindest als Teil der Vorder- oder Rückfläge einer Ein- oder Mehrstärkenlinse oder einer Gleitsichtlinse ausgebildet werden, bei Mehrstärkenlinsen auch als Verschmelzfläche.

Die neue Brillenlinse hat zu ihrer Errechnung soviele Freiheitsgrade zur Verfügung, daß die Korrektionsgüte von der Wahl der Durchbiegung der Linse nicht abhängt. Die Durchbiegung kann deshalb nach kosmetischen, und/oder einschleif- bzw. fertigungstechnischen Gesichtspunkten gewählt werden. Auch läßt sich erreichen, daß die Korrektionsleistung der Brillenlinse gegenüber Dezentrierfehlern beim Einschleifen in die Fassung und gegenüber sich änderndem Hornhaut-Scheitel-Abstand unempfindlich gehalten wird.

Bei der erfindungsgemäß ausgestalteten deformierten Linsenfläche genügt keine der Schnittkurven, welche durch den Schnitt mit Ebenen durch die optische Achse gebildet werden den Gesetzen eines Kegelschnitts. Damit unterscheidet sich die neue Brillenlinse von allen bekannten Brillenlinsen mit astigmatischer Wirkung.

Die Erfindung umfaßt alle Brillenlinsen, die der Formel des Anspruchs 1 genügen und die dies nur deshalb tun, weil mindestens eine Linsenfläche gemäß den Merkmalen dieses Anspruchs deformiert ist.

Die Herstellung der Brillenlinsen nach der Erfindung ist mit Hilfe von numerisch codierten Bearbeitungsmaschinen möglich. Solche Maschinen sind bekannt und auf dem Markt erhältlich. Es ist auch möglich Brillenlinsen nach der Erfindung aus organischem Material herzustellen und dazu die bekannte Technik des Formgießens zu verwenden.

Die Erfindung wird im folgenden anhand der Fig. 1-7 der beigefügten Zeichnungen näher erläutert. Im einzelnen zeigen :

Figur 1   einen Horizontalschnitt durch ein System Brillenlinse-Auge ;

Figur 2   eine Brillenlinse in objektseitiger Ansicht ;

Figur 3   eine vergrößerte Darstellung der Umgebung des aus Fig. 1 ersichtlichen Durchstoßpunktes ;

Figur 4   die Abhängigkeit des Astigmatismus einer bekannten einfachen innentorischen Brillenlinse vom Winkel $\psi$ mit und ohne Berücksichtigung der Lage des Augenastigmatismus ;

Figur 5   die Differenz der Achslagen von Linse und Auge für das Beispiel der Fig. 4 ;

Figur 6   die Abhängigkeit des Astigmatismus des Systems Linse-Auge vom Winkel $\psi$ bei einer vorgewählten Blickrichtung für bekannte torische Brillenlinsen und für eine Brillenlinse nach der Erfindung ;

Figur 7   einen durch den Hauptmeridian gelegten Schnitt durch ein Ausführungsbeispiel der Erfindung.

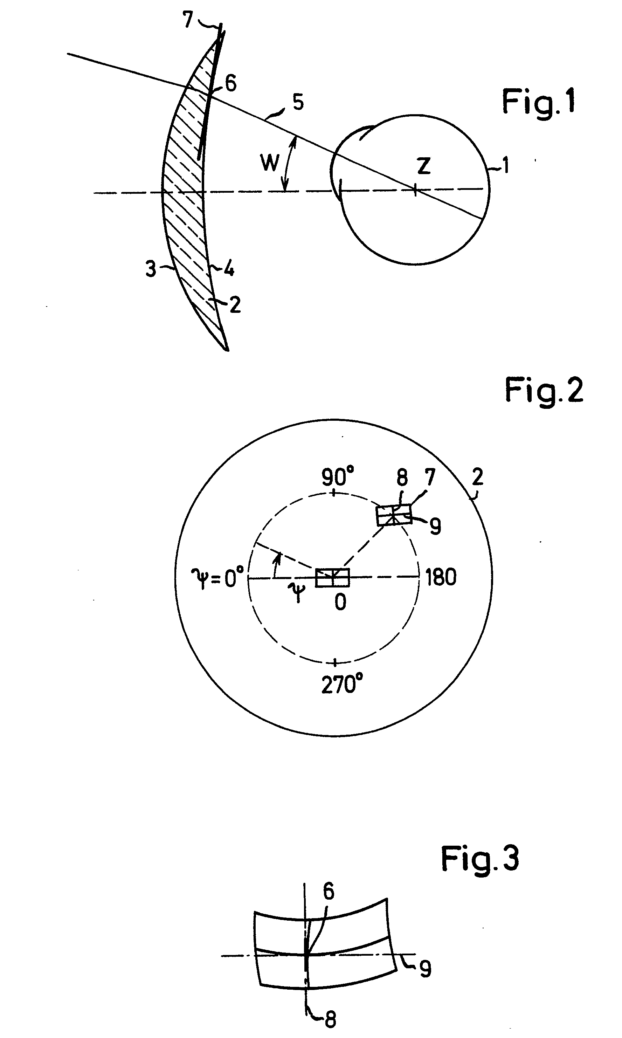

In Fig. 1 ist mit 1 ein schematisch dargestelltes Auge bezeichnet, dessen optischer Drehpunkt die Bezeichnung Z trägt. Vor dem Auge 1 ist eine Brillenlinse 2 angeordnet, deren objektseitige Fläche 3 sphärisch und deren augenseitige Fläche 4 torisch oder deformiert ist. Die Brillenlinse 2 hat damit eine astigmatische Wirkung, die den astigmatischen Fehler des Auges 1 kompensieren soll. Das Auge 1 blickt in eine Richtung, die durch den Blickwinkel w zwischen dem Sehstrahl 5 und der Horizontalen definiert wird. Zur weiteren Definition der Blickrichtung dient der Winkel $\psi$ (Fig. 2), der die Lage des Sehstrahls auf dem Blickkegel w = constant festlegt. Beim Blick nach rechts ist definitionsgemäß $\psi = 0°$, beim Blick nach oben ist $\psi = 90°$, wie dies aus Fig. 2 ersichtlich ist.

Die Gestalt der Fläche 4 ist in jedem Punkt durch die beiden Hauptkrümmungen und die Hauptkrümmungsrichtungen festgelegt. Zur Veranschaulichung dienen die Fig. 1 und 2. Im Durchstoßpunkt 6 des Sehstrahls 5 mit der Fläche 4 ist eine Tangentialebene 7 eingezeichnet. In jedem zu dieser Tangentialebene senkrechten Schnitt hat die Fläche 4 eine gewisse Krümmung. Die stärkste und die schwächste Krümmung heißen Hauptkrümmungen. Die zugehörigen Richtungen 8 und 9 sind die Hauptkrümmungsrichtungen.

Fig. 3 zeigt eine vergrößerte Darstellung der Umgebung des Durchstoßpunkts 6, aus der die Hauptkrümmungen deutlich werden.

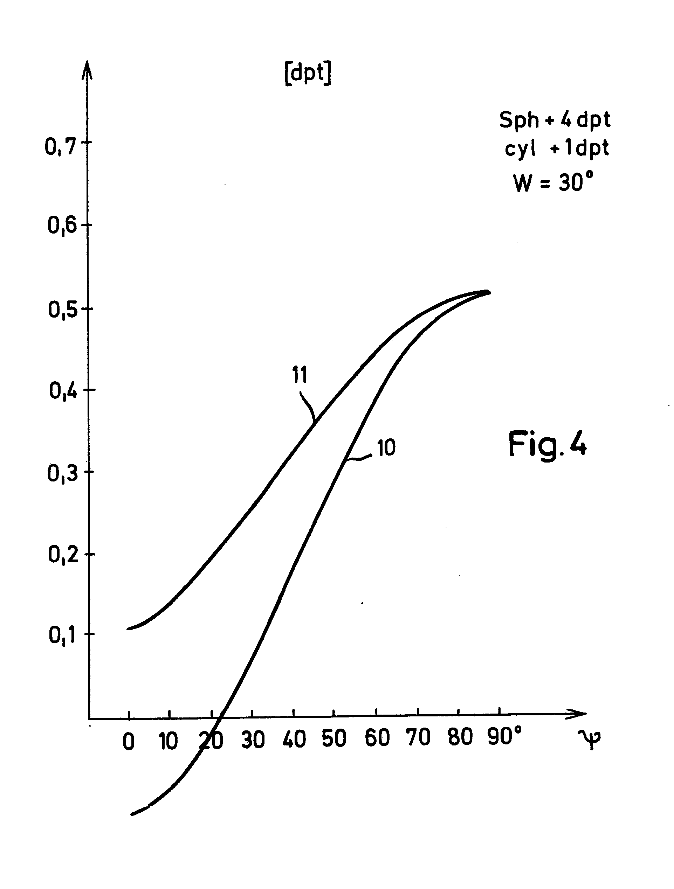

Die Kurven der Fig. 4 beziehen sich auf eine bekannte innentorische Brillenlinse, d. h. eine Linse, bei der die augenseitige Fläche 4 torisch ist. Gewählt ist das Beispiel einer Brillenlinse mit einer sphärischen Wirkung von + 4 dpt und einer zylindrischen Wirkung von + 1 dpt. Eine solche Linse hat also in einem Hauptschnitt eine Wirkung von + 5 dpt, im anderen Hauptschnitt von + 4 dpt. Dargestellt ist der Verlauf des Astigmatismus für ein Auge, das unter einem Blickwinkel von w = 30° von der Horizontalen $\psi = 0°$ bis zur Vertikalen $\psi = 90°$ wandert. Diese Betrachtung genügt, da sich aus Symmetriegründen in den anderen Quadranten dieselben Verhältnisse ergeben.

Die Kurve 10 zeigt den Verlauf des Astigmatismus der Brillenlinse alleine. Man erkennt, daß der Astigmatismus bei etwa $\psi = 23°$ zu Null wird, jedoch in anderen Winkelbereichen Werte bis etwa 0,5 dpt erreicht. Die Kurve 11 zeigt den Restastigmatismus des Systems Brillenlinse-Auge. Man erkennt, daß hier bei $\psi = 23°$ ein Restastigmatismus von über 0,2 dpt verbleibt. Bei größeren Werten des Winkels w und bei stärkeren Brillenlinsen wird die durch die Kurve 11 dargestellte Erscheinung noch weit ausgeprägter.

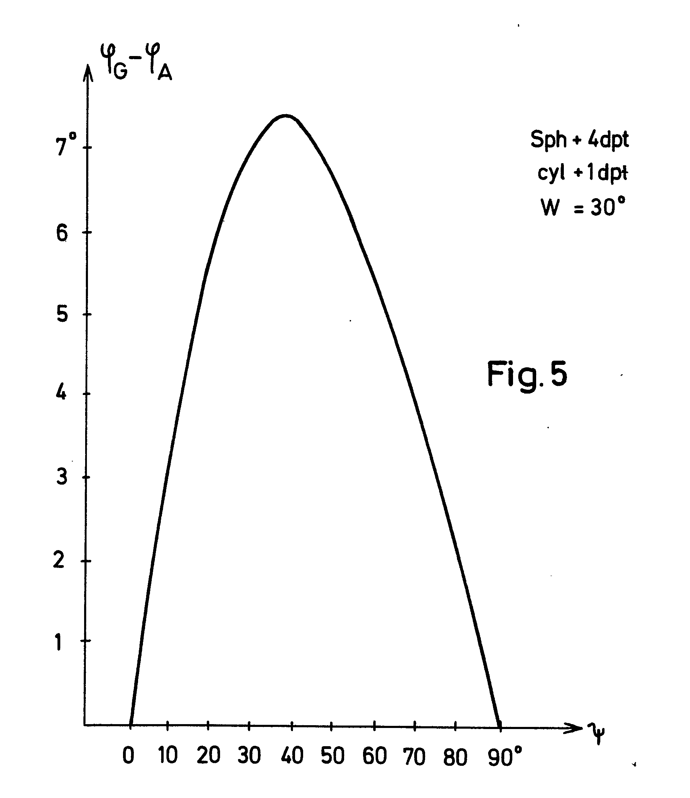

Die Kurve 12 der Fig. 5 begründet den unterschiedlichen Verlauf der Kurven 10 und 11 der Fig. 4. Im dargestellten Beispiel ist davon ausgegangen, daß das Auge bei Nullblickrichtung (beim Blick durch den Punkt 0 in Fig. 2) einen Astigmatismus mit Achse 180° habe. Wandert nun das Auge auf dem Blickkegel w = 30° von der Horizontalen ($\psi = 0°$) zur Vertikalen ($\psi = 90°$), so nimmt die Achslage, die in der

**0 039 498**

nachfolgenden Tabelle mit $\varphi_A$ bezeichneten Winkellagen ein. Der Winkel $\varphi_A$ ist dabei definiert in der Ebene senkrecht zum jeweiligen Sehstrahl, z. B. dem Sehstrahl 5 der Fig. 1 als Winkel zwischen der horizontalen Geraden und der Achse des Astigmatismus. Eine entsprechende Definition gilt für den Winkel $\varphi_G$, der die Achslage der zylindrischen Wirkung der Brillenlinse nach Fig. 4 bezeichnet.

| $\psi$ | $\varphi_A$ | $\varphi_G$ |
|---|---|---|
| 0 | 180,0 | 180,0 |
| 10 | 178,7 | 180,7 |
| 20 | 177,5 | 181,3 |
| 30 | 176,6 | 182,0 |
| 40 | 176,0 | 182,5 |
| 50 | 175,9 | 183,3 |
| 60 | 176,3 | 183,3 |
| 70 | 177,2 | 182,8 |
| 80 | 178,5 | 181,5 |
| 90 | 180,0 | 180,0 |

Die Winkelwerte sind in Grad angegeben.

Kurve 12 in Fig. 5 stellt die Differenz $\varphi_G - \varphi_A$ dar.

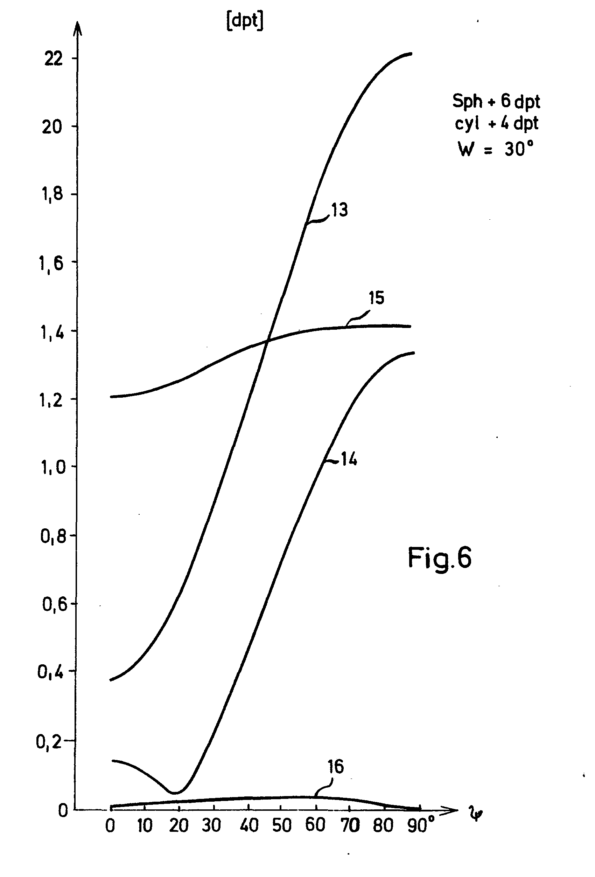

Fig. 6 zeigt für eine Brillenlinse der angegebenen dioptrischen Wirkungen und für einen Blickwinkel $w = 30°$ den Astigmatismus des Systems Brillenlinse-Auge zwischen $\psi = 0°$ und $\psi = 90°$. Die Kurve 13 ergibt sich für eine Brillenlinse mit innentorischer Fläche, d. h. eine Brillenlinse gemäß Fig. 1. Ein etwas besseres Ergebnis erzielt man entsprechend der Kurve 14, wenn die Brillenlinse mit außentorischer Fläche ausgebildet wird. Eine solche Brillenlinse befriedigt jedoch ästhetisch in keiner Weise.

Nun könnte man daran denken bei einer Brillenlinse mit einer sphärischen und einer torischen Fläche die sphärische Fläche durch eine rotationssymmetrische asphärische Fläche zu ersetzen. Das Ergebnis zeigt Kurve 15. Das Fehlerniveau bleibt im wesentlichen bestehen, lediglich die Fehlerschwankungen zwischen den einzelnen Meridianschnitten lassen sich etwas ausgleichen.

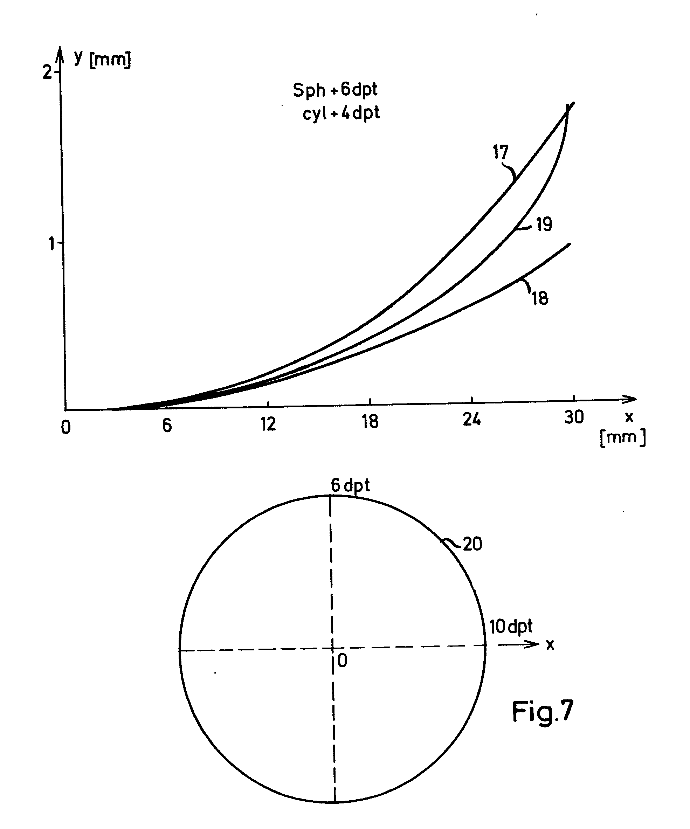

Die Brillenlinse 20 nach der vorliegenden Erfindung weist nun anstelle einer torischen eine im Sinne der Erfindung deformierte Fläche auf, die als atorische Fläche bezeichnet werden kann. Fig. 7 zeigt für die angegebenen dioptrischen Wirkungen einen Schnitt durch den Hauptmeridian, in dem die optische Wirkung + 10 dpt beträgt. Denkt man sich im Punkt 0 eine vertikale Tangentialebene an die atorische Fläche gelegt und schneidet senkrecht dazu durch den horizontalen Hauptmeridian, so folgt die sich ergebene Schnittkurve der in Fig. 7 gezeigten Kurve 17. y gibt dabei die Pfeilhöhe der Schnittkurve bezüglich der Vertikalebene an.

Die Kurve 17 weicht von der kreisförmigen Gestalt ab, die durch Kurve 18 gegeben wäre. Kurve 17 ist aber auch kein Kegelschnitt. Der Kegelschnitt, der bis zum Halbmesser x = 30 mm definiert ist und der Kurve 17 am nächsten kommt, verläuft entsprechend der Kurve 19. Alle anderen denkbaren Kegelschnitte liegen zwischen der Kurve 19 und der x-Achse.

Die Linse 20 bewirkt, daß der Restastigmatismus des Systems Brillenlinse-Auge auf Werte nahe Null sinkt, wie dies Kurve 16 in Fig. 6 zeigt. Der noch bestehende Restastigmatismus genügt der Güteformel des Anspruchs 3.

Die Brillenlinse 20 nach der Erfindung erhält eine Durchbiegung, die nach kosmetischen und/oder einschleif- bzw. fertigungstechnischen Gesichtspunkten gewählt werden kann, da ihre Korrektionsgüte nicht von der Durchbiegung abhängt.

**Ansprüche**

1. Brillenlinse mit astigmatischer Wirkung, die mindestens eine von der sphärischen oder torischen Form abweichende, zur Korrektur des Astigmatismus eines Auges dienende Linsenfläche aufweist, dadurch gekennzeichnet, daß diese Linsenfläche aus einzeln berechneten kleinen Bereichen so zusammengesetzt ist, daß sie an jedem Punkt zweimal stetig differenzierbar ist und an verschiedenen Stellen unterschiedliche Werte der Hauptkrümmungsrichtungen und der Hauptkrümmungen aufweist, deren Werte so gewählt sind, daß Achslage und Betrag des Astigmatismus der Brillenlinse den Restastigmatismus des Systems Brillenlinse/Auge auf einen Wert reduziert, der für alle Blickwinkel $w \gtrsim 10°$ bis zum Linsenrand für alle durch den Winkel $\psi$ gekennzeichneten Lagen der Blickgeraden auf dem Blickkegel w = constant zwischen 0° und 360° der folgenden Beziehung genügt :

$$|\text{Restastigmatismus } (w, \psi)| \leqq (0,125 + 0,000\,25\,w^2) \times \min\,(1\,;\,2z/3) \times (1 + |s|)/8,75$$

4

dabei ist

w der Blickwinkel in Grad

z die Zylinderwirkung in Dioptrien

s das sphärische Äquivalent und

der Ausdruck min (1 ; 2z/3) bedeutet, daß je nach dem Wert von z der jeweils kleinere Wert von 1 oder 2z/3 einzusetzen ist.

2. Brillenlinse mit einer Linsenfläche nach Anspruch 1, dadurch gekennzeichnet, daß diese Linsenfläche mindestens einen Teil der Vorder- oder Rückfläche einer Ein- oder Mehrstärkenlinse bildet.

3. Brillenlinse mit einer Linsenfläche nach Anspruch 1, dadurch gekennzeichnet, daß diese Linsenfläche als Verschmelzfläche einer Mehrstärkenlinse ausgebildet ist.

4. Brillenlinse mit einer Linsenfläche nach Anspruch 1, dadurch gekennzeichnet, daß diese Linsenfläche zumindest als Teil der Vorder- oder Rückfläche einer Gleitsichtlinse ausgebildet ist.

## Claims

1. Spectacle lens with astigmatic effect, which has at least one lens surface of other than spherical or toric form and which serves to correct the astigmatism of an eye, characterized by the fact that this lens surface is so formed of individually calculated small regions, that it is twice continuously differentiable at each point and that it has different values of the principal curvature-directions and the principal curvatures at different points, said values being so selected, that the axial position and the magnitude of the astigmatism of the spectacle lens reduce the residual astigmatism of the spectacle lens/eye-system to a value which for all visual angles w $\geq$ 10° up to the edge of the lens for all positions of the lines of view characterized by the angle $\varphi$ on the vision cone w = constant between 0° and 360° satisfies the following relationship :

$$|\text{Residual astigmatism } (w, \psi)| \leq (0.125 + 0.00025 \, w^2) \times \min (1 ; 2z/3) \times (1 + |s|)/8.75$$

where

w is the visual angle, in degrees

z is the cylinder effect in diopters

s is the spherical equivalent, and

the factor min (1 ; 2z/3) means, that, in each case, corresponding to the value of z, the smallest value of 1 or 2z/3 is to be inserted.

2. Spectacle lens with a lens surface according to claim 1, characterized by the fact that this lens surface forms at least a part of the front or rear surface of a single-focus or multi-focus lens.

3. Spectacle lens with a lens surface according to claim 1, characterized by the fact that this lens surface is developed as the fusion surface of a multi-focus lens.

4. Spectacle lens with a lens surface according to claim 1, characterized by the fact that this lens surface is developed as at least part of the front or rear surface of a progressive lens.

## Revendications

1. Verre de lunettes à effet astigmatique, qui présente au moins une surface de verre servant à la correction de l'astigmatisme d'un œil, s'écartant de la forme sphérique ou torique, caractérisé en ce que cette surface de verre est constituée de petits segments calculés individuellement, de telle sorte qu'elle puisse être toujours différenciée deux fois en chaque point et présente en les différents points des valeurs différentes pour les directions de courbure principale et les courbures principales, dont les valeurs sont choisies de façon que la position de l'axe et l'importance de l'astigmatisme du verre de lunettes réduisent l'astigmatisme résiduel du système verre de lunettes/œil à une valeur qui, pour tous les angles de vision w $\geq$ 10°, jusqu'au bord du verre, pour toutes les positions des axes de vision, caractérisées par l'angle $\psi$, sur le cône de vision w = constante, comprises entre 0 et 360°, satisfasse à la relation suivante :

$$|\text{astigmatisme résiduel } (w, \psi)| \leq (0,125 + 0,000\ 25 \, w^2) \times \min (1 ; 2z/3) \times (1 + |s|)/8,75$$

où

w est l'angle de vision en degrés,

z est l'effet cylindrique en dioptries,

s est l'équivalent sphérique et

l'expression min (1 ; 2z/3) signifie que, selon la valeur de z, on prendra la plus faible des valeurs 1 ou 2z/3.

2. Verre de lunettes avec une surface de verre selon la revendication 1, caractérisé en ce que cette surface de verre forme au moins une partie de la surface frontale ou de la surface arrière d'un verre mono- ou multifocal.

**0 039 498**

3. Verre de lunettes ayant une surface de verre selon la revendication 1, caractérisé en ce que cette surface de verre est formée comme la surface de jonction d'une lentille multifocale.

4. Verre de lunettes ayant une surface de verre selon la revendication 1, caractérisé en ce que cette surface de verre est constituée au moins en tant que partie de la surface frontale ou de la surface arrière d'un verre à focale continue.

Fig.1

Fig.2

Fig.3

Fig. 4

Fig. 5

Sph + 4dpt
cyl +1dpt
W = 30°

Fig.6

Sph + 6 dpt
cyl + 4 dpt
W = 30°

Fig.7